# EUROPEAN PATENT SPECIFICATION

(11) **EP 3 800 385 B1**
(45) Date of publication and mention of the grant of the patent: **14.12.2022**
(21) Application number: 20198897.9
(22) Date of filing: 29.09.2020
(51) Int. Cl.: F16J 15/3236, F16J 15/56, F15B 15/14

(54) **SEAL ELEMENT FOR AN AXIALLY SLIDING ROD**
DICHTELEMENT FÜR EINE AXIAL VERSCHIEBBARE STANGE
ÉLÉMENT D'ÉTANCHÉITÉ POUR UNE TIGE COULISSANT AXIALEMENT

(30) Priority: 02.10.2019 IT 201900017747
(43) Date of publication of application: 07.04.2021
(73) Proprietor: Artic Seals S.r.l., 42010 Rio Saliceto (RE) (IT)
(72) Inventor: SCALTRITI, Doriano, 42010 RIO SALICETO (RE) (IT)
(74) Representative: Cernuzzi, Daniele

(56) References cited:
- WO-A1-2011/086887
- DE-A1-102017 208 285
- US-A1- 2009 282 972

## Description

### CROSS-REFERENCE TO RELATED APPLICATIONS

This Patent Application claims priority from Italian Patent Application No. 102019000017747 filed on October 2, 2019.

### TECHNICAL FIELD

The invention relates to a seal element for an axially sliding rod sliding in a seat, in particular for a rod of a hydraulic cylinder.

The invention is applied, in particular, to the heads of oil-operating hydraulic cylinders, for example cylinders for power steering mechanisms, lifting cylinders, cylinders for elevators, etcetera.

### BACKGROUND ART

Different types of seal elements are known, which are designed to cooperate with a rod axially sliding in a seat, for example a rod of a piston of a hydraulic cylinder.

A common seal element for these applications consists of a ring made of a suitable elastomer material, which is fitted around the rod and is provided with a pair of radially opposite sealing rings, which cooperate with the rod and with a lateral wall of the seat thereof (for example, the head of the cylinder) respectively.

Seal elements in general and, in particular, seal elements subjected to sliding movements, such as the ones used in hydraulic applications, suffer from the fact that sliding contact between the seal element and the surface of the member making a movement relative to the seal element is subjected to a great friction and, therefore, generates high temperatures, which can cause the material of the seal element to soften.

The greater the pressure, the higher the operating temperatures, since a pressure increase leads to an increase in the contact surface.

The softening of the material of the seal element increases the risk of deterioration of the seal element and, in particular, the risk of extrusion: especially if the seal element operates under high pressure conditions, the seal element can deform through the backlash between the seal surfaces between which it operates. Extrusion can cause lacerations of the seal element and/or the shifting thereof from the right sealing position, with a consequent loss of the sealing capacity.

In order to avoid or at least reduce these deteriorating phenomena, anti-extrusion rings are used, which are fitted around the base of the seal element.

However, the use of anti-extrusion rings leads to a greater complexity and to an increase in the cost of the seal element as a whole, besides not always ensuring a fully acceptable result.

US2009/282972A1, WO2011/086887A1 and DE102017208285A1 disclose seal elements for sliding components, comprising a ring body provided with opposite radial sealing lips and having a plurality of studs projecting radially from a radially inner lateral surface of the ring body and angularly spaced apart from one another.

Therefore, seal elements are needed, which operate with a small sliding friction and with a great resistance to extrusion, despite working under high pressure conditions and not needing anti-extrusion rings.

### DISCLOSURE OF INVENTION

The object of the invention is to provide a seal element for an axially sliding rod sliding in a seat, which is simple and economic to be manufactured and installed as well as fully effective, reliable and long-lasting. In particular, the object of the invention is to provide a seal element which is capable of operating with a small sliding friction and with a great resistance to extrusion, even in the presence of high operating pressures.

Therefore, the invention relates to a seal element for an axially sliding rod sliding in a seat as basically defined in appended claim 1 and, for its preferred aspects, in the dependent claims.

The seal element according to the invention is simple and economic to be manufactured and installed as well as fully effective, reliable and long-lasting.

In particular, the specific profile of the seal element of the invention allows for a significant reduction both in the operating temperature of the seal element and in the consequent risk of extrusion.

According to the invention, the particular profile of the seal element eliminates the need for an additional anti-extrusion component.

Indeed, the presence of a series of studs on the inner sliding surface of the seal element decreases the area of contact with the sliding rod in the seal element, thus reducing, in turn, friction even when the seal element is subjected to high pressures and detaching the base of the seal element from the gap existing between the rod and the respective sliding seat, hence minimizing the risk of extrusion.

The channel adjacent to the studs, between the studs and the sealing lip, not only further reduces the surface of contact with the moving rod, but also allows oil to be held on the sliding surface in front of the sealing lip, thus creating an oil chamber to lubricate the sealing lip, which allows for a smooth operation and further reduces friction.

Optionally, then, the seal element of the invention has a great radius of curvature, again in order to minimize the risk of extrusion.

### BRIEF DESCRIPTION OF THE DRAWINGS

Further features and advantages of the invention will be best understood upon perusal of the following description of a non-limiting embodiment thereof, with reference to the accompanying drawings, wherein:
- figure 1 is a perspective view of a seal element for an axially sliding rod according to the invention;

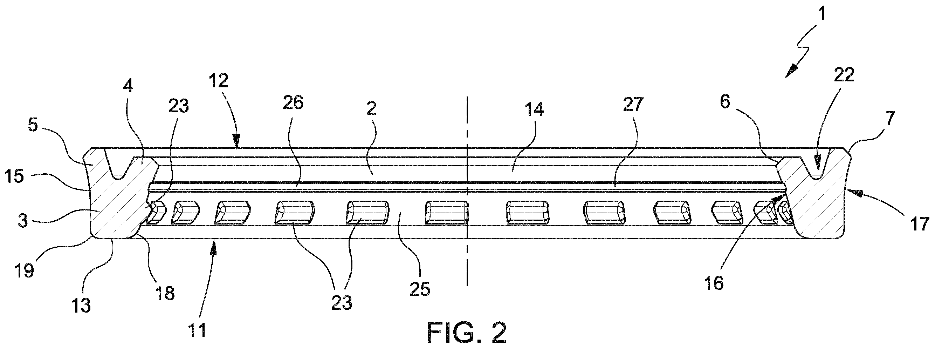

- figure 2 is a longitudinal section view of the seal element of figure 1;

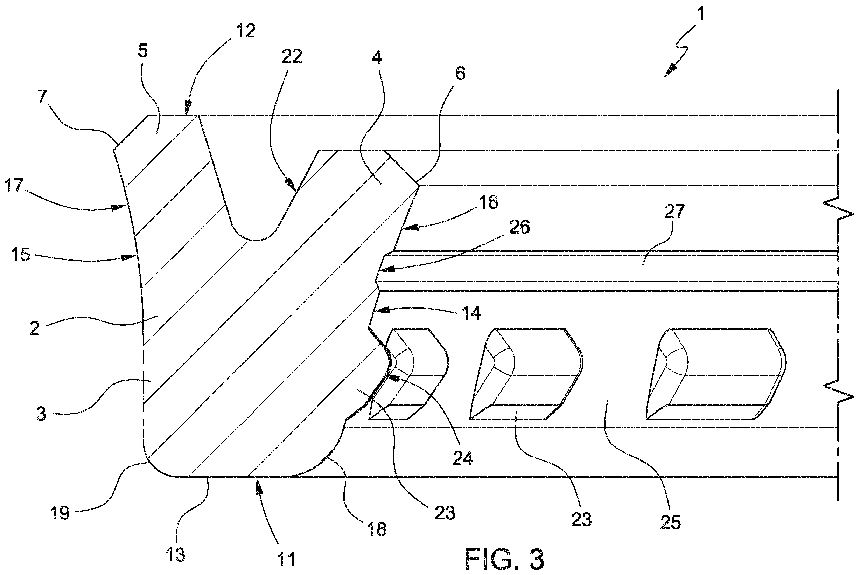

- figure 3 is a view on a larger scale of a detail of the seal element shown in figure 2.

### BEST MODE FOR CARRYING OUT THE INVENTION

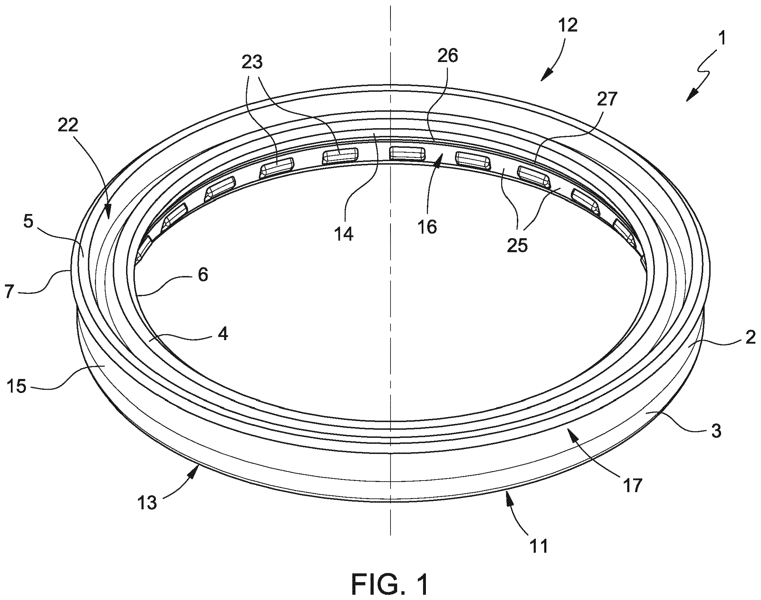

In figure 1, number 1 indicates a seal element for an axially sliding rod (not shown) sliding in a seat, such as for example a rod of a piston housed in a cylinder containing oil under pressure and defining, on the inside, a sliding seat for the piston (all known elements, which are not described or shown for the sake of simplicity).

Even though the seal element 1 is particularly suited to be used with a rod of a hydraulic cylinder, the seal ring 1 according to the invention can be used in other applications as well.

The seal element 1 is substantially annular and ringshaped and extends around a central axis A.

The seal element 1 comprises or consists of a ring body 2, which extends around the axis A; the ring body 2 is, in particular, a monolithic body made of an elastomer material. The entire monolithic ring body 2 and, hence, the entire seal element 1 is preferably made of one single elastomer material, in particular a thermoplastic polyurethane elastomer (TPU).

The ring body 2 has a substantially V-shaped radial section (on a plane containing the axis A) and comprises a base portion 3 and two radially opposite arms 4, 5, which protrude from the base portion 3 in a diverging manner and are provided with respective opposite radial sealing lips 6, 7.

Hereinafter, the axial direction is assumed to be the direction along the axis A and the radial direction is assumed to be the direction along a generic radius orthogonally stemming from the axis A (and, hence, from the centre of the seal element 1); therefore, the terms "radially outer" and "radially inner" used for a pair of elements indicate that these elements are arranged, in a radial direction, namely along a radius of the seal element 1, towards the outside and towards the centre, respectively, of the seal element 1.

In particular, the ring body 2 comprises a radially inner arm 4 having a radial sealing lip 6 radially facing the inside of the seal element 1 (i.e. towards the axis A); and a radially outer arm 5 having a radial sealing lip 7 radially facing the outside of the seal element 1 and opposite the lip 6.

The ring body 1 extends between two opposite axial ends 11, which are respectively provided with a base surface 13 and with the arms 4, 5; and it has a pair of opposite lateral sides 14, 15, which are respectively provided with a radially inner lateral surface 16 and with a radially outer lateral surface 17.

The base surface 13 is a substantially flat annular surface, for example substantially flat and orthogonal to the axis A.

The lateral surfaces 16, 17 join the base wall 13 to the arms 4, 5 and are joined to the base surface 13 by respective (convex) curved joining portions 18, 19, which are opposite one another.

The joining portion 18, which joins the base surface 13 to the radially inner lateral surface 16, has a large radius of curvature, greater than the joining portion 19.

The arms 4, 5 project in a fork-like manner form the base portion 3 in a direction facing away from the base surface 13 and, under non-deformed conditions, are inclined relative to the axis A, diverge from the base portion 3 and radially project, at least with the respective radial sealing lips 6, 8, relative from the base portion 3 and in particular, relative to the base surface 13.

The arms 4, 5 are elastically connected to the base portion 3, since they are made of an elastomer material and, in particular, as one single piece together with the base portion 3, so as to generate a spring effect upon the rod moving inside the seal element 1 (i.e. inside the ring body 2).

The lip 6 of the radially inner arm 4 is, in use, a dynamic sealing lip cooperating, in use, with the rod housed in a sliding element in the seal element 1, in particular inside the ring body 2. The lip 7 of the radially outer arm 5 is a static sealing lip cooperating, in use, with a wall of the seat housing the sliding rod.

The arms 4, 5 are separated from one another, at the end 12 of the seal element 1, by a recess 22.

Preferably, according to the non-limiting embodiment shown by way of example, the two arms 4, 5 have different lengths along the axis A and, in particular, the radially outer arm 5 is longer than the radially inner arm 4.

According to the invention, the side 14 is provided with a plurality of studs 23, which radially project from the lateral surface 16 towards the axis A, are circumferentially arranged one after the other along the lateral surface 16 and are angularly spaced apart from one another around the axis A.

In the embodiment shown herein, though not necessarily, the studs 23 are circumferentially aligned on the lateral surface 16; some of the studs 23 could also be axially staggered.

In the embodiment shown herein, the studs 23 are all the same in terms of shape and sizes and are equally spaced apart from one another, but the studs 23 could clearly have shapes and/or sizes that are different from one another and be differently spaced apart from one another.

Each stud 23 consists of a projection protruding from the lateral surface 16 and has a substantially convex surface 24.

The studs 23 are separated from one another by a series of gaps 25 defined by respective flat portions of the lateral surface 16.

The studs 23 are located on the base portion 3 of the ring body 2 at a predetermined distance from the end 11.

According to a further aspect of the invention, the lateral surface 16 has an annular channel 26 extending along the lateral surface 16 around the axis A and located between the studs 23 and the lip 6.

The channel 26 is defined by a continuous annular groove 27 formed on the lateral surface 16.

The seal element described and explained herein can be subjected to changes and variants, which do not go beyond the scope of protection of the invention set forth in the appended claims.

## Claims

1. A seal element (1) for an axially sliding rod, in particular a rod of a hydraulic cylinder, comprising a ring body (2) extending about an axis (A) and comprising a base portion (3) and two radially opposite arms (4, 5) that project diverging from the base portion (3) and are provided with respective opposite radial sealing lips (6, 7); the ring body (2) having a pair of opposite lateral sides (14, 15) provided with a radially inner lateral surface (16) and a radially outer lateral surface (17) respectively; the radially inner lateral surface (16) being provided with a plurality of studs (23) projecting radially from the radially inner lateral surface (16) toward the axis (A) and angularly spaced apart from one another about the axis (A); **characterized in that** the ring body (2) is a monolithic body made of elastomer material and the radially inner lateral surface (16) has an annular channel (26) extending along the radially inner lateral surface (16) about the axis (A) and positioned between the studs (23) and the respective sealing lip (6).

2. A seal element according to claim 1, wherein the studs (23) are circumferentially aligned to one another on the radially inner lateral surface (16).

3. A seal element according to claim 1 or 2, wherein the studs (23) are all the same in terms of shape and sizes and are equally spaced apart from one another.

4. A seal element according to one of the preceding claims, wherein each stud (23) consists of a projection protruding from the radially inner lateral surface (16) and having a substantially convex surface (24).

5. A seal element according to one of the preceding claims, wherein the studs (23) are separated from one another by a series of gaps (25) defined by respective flat portions of the radially inner lateral surface (16).

6. A seal element according to one of the preceding claims, wherein the channel (26) is defined by a continuous annular groove (27) formed on the radially inner lateral surface (16).

7. A seal element according to one of the preceding claims, wherein the ring body (2) extends between two opposite axial ends (11, 12), provided with a base surface (13) and with the arms (4, 5) respectively; and wherein the base surface (13) is a substantially flat annular surface, for example substantially plane and perpendicular to the axis (A).

8. A seal element according to claim 7, wherein the lateral surfaces (16, 17) are joined to the base surface (13) by respective opposite curved joining portions (18, 19); and wherein a first joining portion (18), joining the base surface (13) with the radially inner lateral surface (16), has a high radius of curvature, greater than the other joining portion (19).

## Patentansprüche

1. Dichtelement (1) für eine axial verschiebbare Stange, insbesondere eine Stange eines Hydraulikzylinders, das einen Ringkörper (2) umfasst, der sich um eine Achse (A) erstreckt und einen Basisabschnitt (3) und zwei radial entgegengesetzte Arme (4, 5) umfasst, die von dem Basisabschnitt (3) auseinanderlaufend hervorstehen und mit entsprechenden entgegengesetzten radialen Dichtungslippen (6, 7) versehen sind; wobei der Ringkörper (2) ein Paar entgegengesetzte laterale Seiten (14, 15) aufweist, die mit einer radial inneren lateralen Oberfläche (16) beziehungsweise einer radial äußeren lateralen Oberfläche (17) versehen sind; wobei die radial innere laterale Oberfläche (16) mit einer Vielzahl von Bolzen (23) versehen ist, die radial von der radial inneren lateralen Oberfläche (16) hin zur Achse (A) hervorstehen und um die Achse (A) winklig voneinander beabstandet sind; **dadurch gekennzeichnet, dass** der Ringkörper (2) ein monolithischer Körper ist, der aus Elastomermaterial besteht, und die radial innere laterale Oberfläche (16) einen ringförmigen Kanal (26) aufweist, der sich entlang der radial inneren lateralen Oberfläche (16) um die Achse (A) erstreckt und zwischen den Bolzen (23) und der entsprechenden Dichtungslippe (6) positioniert ist.

2. Dichtelement nach Anspruch 1, wobei die Bolzen (23) in Umfangsrichtung auf der radial inneren lateralen Oberfläche (16) aufeinander ausgerichtet sind.

3. Dichtelement nach Anspruch 1 oder 2, wobei die Bolzen (23) hinsichtlich Form und Größen alle gleich sind und gleich voneinander beabstandet sind.

4. Dichtelement nach einem der vorhergehenden Ansprüche, wobei jeder Bolzen (23) aus einem Vorsprung besteht, der von der radial inneren lateralen Oberfläche (16) hervorsteht und eine im Wesentlichen konvexe Oberfläche (24) aufweist.

5. Dichtelement nach einem der vorhergehenden Ansprüche, wobei die Bolzen (23) durch eine Reihe von Lücken (25) voneinander getrennt sind, die von entsprechenden flachen Abschnitten der radial inneren lateralen Oberfläche (16) definiert sind.

6. Dichtelement nach einem der vorhergehenden Ansprüche, wobei der Kanal (26) von einer ununterbrochenen ringförmigen Rille (27) definiert ist, die auf der radial inneren lateralen Oberfläche (16) gebildet ist.

7. Dichtelement nach einem der vorhergehenden Ansprüche, wobei der Ringkörper (2) sich zwischen zwei entgegengesetzten axialen Enden (11, 12) erstreckt, die mit einer Basisoberfläche (13) beziehungsweise mit den Armen (4, 5) versehen sind; und wobei die Basisoberfläche (13) eine im Wesentlichen flache ringförmige Oberfläche ist, die zum Beispiel im Wesentlichen eben und senkrecht zur Achse (A) ist.

8. Dichtelement nach Anspruch 7, wobei die lateralen Oberflächen (16, 17) durch entsprechende entgegengesetzte gekrümmte Verbindungsabschnitte (18, 19) mit der Basisoberfläche (13) verbunden sind; und wobei ein erster Verbindungsabschnitt (18), der die Basisoberfläche (13) mit der radial inneren lateralen Oberfläche (16) verbindet, einen hohen Krümmungsradius aufweist, der größer als der andere Verbindungsabschnitt (19) ist.

## Revendications

1. Élément d'étanchéité (1) pour une tige axialement coulissante, en particulier une tige d'un cylindre hydraulique, comprenant un corps annulaire (2) s'étendant autour d'un axe (A) et comprenant une partie de base (3) et deux bras radialement opposés (4, 5) qui font saillie en déviant de la partie de base (3) et sont prévus avec des lèvres d'étanchéité radiales (6, 7) opposées respectives ; le corps annulaire (2) ayant une paire de côtés latéraux (14, 15) opposés prévus avec une surface latérale radialement interne (16) et une surface latérale radialement externe (17) respectivement ; la surface latérale radialement interne (16) étant prévue avec une pluralité de goujons (23) faisant saillie radialement de la surface latérale radialement interne (16) vers l'axe (A) et angulairement espacés les uns des autres autour de l'axe (A) ; **caractérisé en ce que** le corps annulaire (2) est un corps monolithique réalisé à partir d'un matériau élastomère et la surface latérale radialement interne (16) a un canal annulaire (26) s'étendant le long de la surface latérale radialement interne (16) autour de l'axe (A) et positionné entre les goujons (23) et la lèvre d'étanchéité (6) respective.

2. Élément d'étanchéité selon la revendication 1, dans lequel les goujons (23) sont circonférentiellement alignés les uns par rapport aux autres sur la surface latérale radialement interne (16).

3. Élément d'étanchéité selon la revendication 1 ou 2, dans lequel les goujons (23) sont tous les mêmes en termes de forme et de taille et sont espacés à égale distance les uns des autres.

4. Élément d'étanchéité selon l'une des revendications précédentes, dans lequel chaque goujon (23) se compose d'une saillie faisant saillie de la surface latérale radialement interne (16) et ayant une surface sensiblement convexe (24).

5. Élément d'étanchéité selon l'une des revendications précédentes, dans lequel les goujons (23) sont séparés les uns des autres par une série d'espaces (25) définis par des parties plates respectives de la surface latérale radialement interne (16).

6. Élément d'étanchéité selon l'une des revendications précédentes, dans lequel le canal (26) est défini par une rainure annulaire continue (27) formée sur la surface latérale radialement interne (16).

7. Élément d'étanchéité selon l'une des revendications précédentes, dans lequel le corps annulaire (2) s'étend entre deux extrémités axiales (11, 12) opposées, respectivement prévues avec une surface de base (13) et avec les bras (4, 5) ; et dans lequel la surface de base (13) est une surface annulaire sensiblement plate, par exemple sensiblement plane et perpendiculaire à l'axe (A).

8. Élément d'étanchéité selon la revendication 7, dans lequel les surfaces latérales (16, 17) sont assemblées à la surface de base (13) par des parties d'assemblage courbes (18, 19) opposées respectives ; et dans lequel une première partie d'assemblage (18), assemblant la surface de base (13) avec la surface latérale radialement interne (16), a un rayon de courbure élevé, supérieur à l'autre partie d'assemblage (19).
